# EUROPÄISCHE PATENTSCHRIFT

(11) **EP 4 493 660 B1**
(45) Veröffentlichungstag und Bekanntmachung des Hinweises auf die Patenterteilung: **23.04.2025**
(21) Anmeldenummer: 24726244.7
(22) Anmeldetag: 14.05.2024
(51) Int. Cl.: C10M 169/04, F16C 33/20, B32B 7/12, B32B 15/085, C08K 3/30, C08K 3/32, C10N 20/04, C10N 30/06, C10N 40/02, C10N 50/00, C10N 60/10, C10N 70/00, B23B 3/26, B32B 15/18, B32B 15/20, B32B 3/26, C10N 10/02, C10N 10/04, C10N 10/06, C10N 10/08, C10N 10/10, C10N 10/12, C10N 10/16

(54) **GLEITMATERIAL AUF UHMW-PE-BASIS MIT DIE TRIBOLOGISCHEN EIGENSCHAFTEN BEEINFLUSSENDEN FÜLLSTOFFEN**
UHMW-PE-BASED SLIDING MATERIAL HAVING FILLERS WHICH INFLUENCE THE TRIBOLOGICAL PROPERTIES
MATÉRIAU GLISSANT À BASE DE PE-UHMW AYANT DES CHARGES QUI INFLUENCENT LES PROPRIÉTÉS TRIBOLOGIQUES

(30) Priorität: 07.06.2023 DE 102023115034
(43) Veröffentlichungstag der Anmeldung: 22.01.2025
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schönborn (DE)
(74) Vertreter: DREISS Patentanwälte PartG mbB
(86) Internationale Anmeldenummer: PCT/EP2024/063284
(87) Internationale Veröffentlichungsnummer: WO 2024/251479

(56) Entgegenhaltungen:
- CN-A- 113 278 212
- CN-A- 114 736 448
- JP-A- S59 181 150
- US-A1- 2014 335 336

## Beschreibung

Die Erfindung betrifft ein Gleitmaterial auf Polymerbasis mit die tribologischen Eigenschaften beeinflussenden Füllstoffen.

Solche Gleitmaterialien sind im Stand der Technik in vielfältiger Weise bekannt. Beispielsweise sind Gleitmaterialien auf PTFE-Basis oder PA-Basis bekannt, welche Füllstoffe zur Beeinflussung der tribologischen Eigenschaften umfassen.

Beispielsweise ist in der DE 10 2011 077 008 A1 ein Gleitlagerverbundwerkstoff auf PTFE-Basis beschrieben, wobei Füllstoffe umfassend Thermoplaste und/oder Duroplaste und weitere tribologisch wirksame Stoffe zusammen in compoundierter Form in der Polymerbasis des Gleitschichtmaterials vorliegen.

Weiterhin beschreibt die EP 2 563 590 B1 einen Gleitlagerwerkstoff auf Fluorpolymerbasis, zum Beispiel auf PTFE-Basis, wobei 5-25 Vol.-% Bornitrid und 1-15 Vol.-% Mischphasenoxidpigmente dem Fluorpolymer zugegeben sind, wodurch die Verschleißfestigkeit verbessert werden soll.

Die EP 2 316 707 A1 sowie die EP 1 647 574 A1 beschreibt einen Gleitlagerwerkstoff auf PTFE-Basis mit Bariumsulfat, Phosphat und einer Menge 0,1 bis 2% an Metallsulfid.

Schließlich sind Gleitmaterialien auf POM- und PVDF-Basis bekannt.

Aus der CN 113 278 212 A ist ein Gleitmaterial für Brückenträger enthaltend ultrahochmolekulares Polyethylen und MoS₂ bekannt.

Aus der CN 114 736 448 A ist ein Material enthaltend ultrahochmolekulares Polyethylen und WS₂-g-C₃N₄ bekannt.

Trotz der Vielzahl an Gleitmaterialien, die im Stand der Technik beschrieben sind, besteht nach wie vor ein Bedarf an einem Gleitmaterial, das kostengünstig ist und zudem sowohl für trockenlaufende als auch geschmierte Rotations- und Axialanwendungen geeignet ist.

Die Erfindung beschäftigt sich mit der Aufgabe, ein kostengünstiges Gleitmaterial mit guten Reibeigenschaften und verbesserter Verschleißfestigkeit bereitzustellen.

Diese Aufgabe wird durch ein Gleitmaterial mit den Merkmalen des Anspruchs 1 gelöst. Hierbei handelt es sich um ein Gleitmaterial auf Polymerbasis mit, insbesondere darin dispergierten, Füllstoffen. Das Gleitmaterial besteht insofern aus der Polymerbasis und den Füllstoffen. Die Polymerbasis bildet insbesondere eine (Polymer)matrix, in welcher die Füllstoffe dispergiert sind. Insbesondere sind die Füllstoffe zumindest abschnittsweise in die Polymerbasis eingebettet.

Die Füllstoffe beeinflussen, insbesondere verbessern, die tribologischen Eigenschaften des Gleitmaterials. Insbesondere können die Füllstoffe einen Reibwert des Gleitmaterial und/oder einen Verschleiß des Gleitmaterials reduzieren. Mit Gleitmaterial ist vorliegend insbesondere ein Material gemeint, welches für gleitende Beanspruchung ausgebildet ist, z.B. als Gleitschicht eines Gleitlagers (siehe unten). Insofern handelt es sich bei dem Gleitmaterial insbesondere um ein Oberflächenmaterial.

Die Füllstoffe umfassen eine Mischung aus Calciumphosphat, WS₂ und SnS₂, wobei ein Anteil dieser Mischung maximal 15,0 Gew.-% des Gleitmaterials beträgt.

Die Polymerbasis umfasst ultrahochmolekulares Polyethylen (auch als UHMW-PE oder PE-UHMW bezeichnet). Insofern handelt es sich bei dem erfindungsgemäßen Gleitmaterial um ein Gleitmaterial auf UHMW-PE-Basis. Dies bedeutet nicht zwingend, dass die gesamte Polymerbasis aus UHMW-PE bestehen muss. Vorzugsweise umfasst die Polymerbasis aber mindestens 80,0 Gew.-%, insbesondere mindestens 90,0 Gew.-%, weiter insbesondere mindestens 95,0 Gew.-% ultrahochmolekulares Polyethylen. Besonders vorteilhaft ist es, wenn die Polymerbasis (zu 100 %) aus ultrahochmolekularem Polyethylen besteht. Dies schließt nicht aus, dass die Polymerbasis unerwünschte Verunreinigungen aufweist.

Erfindungsgemäß weist das ultrahochmolekulare Polyethylen eine Molmasse von wenigstens 5,0 Millionen g/mol auf, insbesondere von wenigstens 6,0 Millionen g/mol, weiter insbesondere von wenigstens 6,2 Millionen g/mol, weiter insbesondere von wenigstens 6,5 Millionen g/mol, weiter insbesondere von wenigstens 7,0 Millionen g/mol auf. Als besonders vorteilhaft erweist es sich, wenn das ultrahochmolekulare Polyethylen eine Molmasse von mehr als 6,0 Millionen g/mol, insbesondere von mehr als 6,2 Millionen g/mol, weiter insbesondere von mehr als 6,5 Millionen g/mol, weiter insbesondere von mehr als 7,0 Millionen g/mol, aufweist. Insbesondere weist das ultrahochmolekulare Polyethylen eine Molmasse von maximal 10,0 Millionen g/mol auf.

Durch das vorgeschlagene Gleitmaterial ist ein neuer, hinsichtlich Reibungseigenschaften optimierter Werkstoff bereitgestellt. Im Rahmen der Erfindung hat sich insbesondere herausgestellt, dass durch die vorgeschlagene Kombination aus UHMW-PE und Calciumphosphat und/oder Metallsulfid die Reibungseigenschaften des Gleitmaterials auch bei fortschreitendem Verschleiß weitestgehend konstant bleiben. Durch die Verwendung von UHMW-PE als Polymerbasis ist das Gleitmaterial in der Herstellung zudem vergleichsweise kostengünstig und einfach verarbeitbar, insbesondere gegenüber den bekannten Gleitmaterialien auf PTFE-Basis. Ein weiterer Vorteil der vorgeschlagenen Kombination aus UHMW-PE und Calciumphosphat und Metallsulfid ergibt sich aus der Anwendbarkeit des Gleitmaterials sowohl im Trockenlauf als auch unter Öl- oder Fettschmierung. Auf diese Weise ist ein Einsatzbereich gegenüber nur geschmiert einsatzfähigen Gleitmaterialien, bspw. basierend auf PVDF und POM, erweitert. Das vorgeschlagene Gleitmaterial auf UHMW-PE-Basis ist zudem insbesondere PFAS-frei (d.h. frei von per- und polyfluourierten Chemikalien), was eine umweltfreundliche Herstellung und Entsorgung begünstigt.

Das vorgeschlagene Gleitmaterial eignet sich beispielsweise für Verwendungen im Automobilbereich (z.B. Lenkgetriebe, Servolenkung, Pedallagerungen, Sitzführungsschienen, Achsschenkellager, Bremssattelbuchsen, Heckklappenlager) oder im allgemeinen Industriebereich (z.B. Handhabungs- und Hebeeinrichtungen, Führungsbahnen, Hydraulikzylinder, pneumatische Geräte, Hydraulikmotoren). Weitere Einsatzbereiche umfassen bspw. Skilifte, medizinische Geräte, Textilmaschinen, oder landwirtschaftliche Geräte.

Im Rahmen der Erfindung hat sich überraschenderweise herausgestellt, dass bei der Verwendung von UHMW-PE als Polymerbasis bereits vergleichsweise geringe Mengen an den genannten Füllstoffen (Calciumphosphat und Metallsulfid) ausreichen, um die tribologischen Eigenschaften, insbesondere eine Verschleißbeständigkeit, signifikant zu verbessern. Vorzugsweise beträgt ein Anteil der Mischung aus Calciumphosphat maximal 10,0 Gew.-%, weiter vorzugsweise maximal 7,0 Gew.-%, weiter vorzugsweise maximal 5,0 Gew.-%, weiter vorzugweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.- %, weiter vorzugsweise 3,0 - 5,0 Gew.- % des Gleitmaterials. Insbesondere kann es sich bei den Füllstoffen um eine Mischung aus Calciumphosphat, WS₂ und SnS₂ handeln. Insofern kann das Gleitmaterial aus der Polymerbasis und der eine Mischung aus Calciumphosphat, WS₂ und SnS₂ bestehen.

Als bevorzugt hat sich eine Mischung folgender Zusammensetzung erwiesen:
70,0 - 97,0 Gew.-% Calciumphosphat,
2,0 - 20,0 Gew.-% SnS₂,
1,0 - 10,0 Gew.-% WS₂.

Die Summe der Anteile ergibt dabei 100 Gew.-% (die Prozentangaben beziehen sich insofern auf die Summe der Gewichte der drei Komponenten). Derartige Füllstoffzusammensetzungen bieten besonders gute tribologische Eigenschaften, die insbesondere die Verschleißeigenschaften verbessern.

Als besonders bevorzugt hat sich eine Mischung folgender Zusammensetzung herausgestellt:
88,0 Gew.-% Calciumphosphat,
8,5 Gew.-% SnS₂,
3,5 Gew.-% WS₂.

Im Rahmen einer besonders vorteilhaften Ausgestaltung kann das Gleitmaterial zu 95,0 Gew.-% aus ultrahochmolekularem Polyethyhlen und zu 5,0 Gew.-% aus der Mischung aus Calciumphosphat, WS₂ und SnS₂ (vorzugweise mit der Zusammensetzung 88,0 Gew.-% Calciumphosphat / 8,5 Gew.-% SnS₂ / 3,5 Gew.-% WS₂) bestehen.

Bei manchen Ausgestaltungen können die Füllstoffe außerdem BaSO₄ umfassen. Wie nachfolgend noch näher erläutert, kann durch die Zugabe von BaSO₄ der Anteil an Calciumphosphat und/oder Metallsulfid - bei im wesentlichen gleichbleibenden Verschleißeigenschaften - verringert werden. BaSO₄ dient insbesondere als Festschmierstoff. Vorzugweise beträgt der Anteil an BaSO₄ maximal 10,0 Gew.-%, weiter vorzugweise maximal 5,0 Gew.-%, weiter vorzugweise 1,0 - 10,0 Gew.-%, weiter vorzugsweise 1,0 - 5,0 Gew.-%, des Gleitmaterials.

Im Rahmen einer weiteren besonders vorteilhaften Ausgestaltung kann das Gleitmaterial zu 94,0 Gew.-% aus ultrahochmolekularem Polyethyhlen, zu 3,0 Gew.-% aus der Mischung aus Calciumphosphat, WS₂ und SnS₂, vorzugweise mit der Zusammensetzung 88,0 Gew.-% Calciumphosphat / 8,5 Gew.-% SnS₂ / 3,5 Gew.-% WS₂, und zu 3,0 Gew.-% aus BaSO₄ bestehen.

Bei manchen Ausgestaltungen können die Füllstoffe wenigstens einen weiteren anorganischen Füllstoff, insbesondere Bornitrid, umfassen. Als vorteilhaft hat sich ein Anteil des weiteren anorganischen Füllstoffs, oder der weiteren anorganischen Füllstoffe in Summe, von 0,5 - 3,0 Gew.-%, insbesondere 0,5 - 1,5 Gew.-%, des Gleitmaterials erwiesen.

Zusätzlich oder alternativ können die Füllstoffe einen oder mehrere weitere Funktionsstoffe umfassen. Der wenigstens eine weitere Funktionsstoff kann insbesondere aus der folgenden Gruppe an Funktionsstoffen ausgewählt sein:
- Verstärkungsstoffen, wie insbesondere Kohlenstofffasern, Glasfasern, Polymerfasern (insbesondere Aramidfasern);
- Festschmierstoffen, wie insbesondere ZnS, Graphit, Ruß, oder hexagonales BN;
- Kunststoffpartikel, wie insbesondere Aramid (PPTA)-, PPSO2-, PI- und PAI-Partikel, Polyacrylatpartikel (PAR), PBA-Partikel, PBI-Partikel;
- Metalloxiden, wie insbesondere Fe₂O₃, Al₂O₃, SiO₂, CrO₂, TiO₂, CuO, MgO, ZnO;
- Hartstoffpartikeln, insbesondere keramische Partikel, wie SiC, Si3N4, BC, cubisches BN;
- Fluoriden, wie insbesondere CaF₂, NaF, AlF₃;
- Schichtsilikaten, wie insbesondere Kaolin, Glimmer, Wollastonit, Talk, Kieselsäure;
- metallischen Feinpulvern, wie insbesondere Bronze und Wismut; und
- Pigmenten oder Mischphasenoxidpigmenten, wie insbesondere Co-Al, Cr-Sb-Ti, Co-Ti, Fe-Al oder Co-Cr.

In diesem Zusammenhang kann es sich als vorteilhaft erweisen, wenn der Anteil des weiteren Funktionsstoffs, bzw. der Anteil der mehreren weiteren Funktionsstoffe in Summe, maximal 5 Gew.-% des Gleitmaterials beträgt.

Vorzugweise beträgt ein Anteil der Füllstoffe insgesamt (also in Summe) maximal 25,0 Gew.-%, insbesondere maximal 20,0 Gew.-%, weiter insbesondere maximal 15,0 Gew.-%, weiter insbesondere maximal 10,0 Gew.-%, weiter insbesondere maximal 7,0 Gew.-% des Gleitmaterials. Insbesondere beträgt ein Anteil der Füllstoffe 1,0 - 25,0 Gew.-%, insbesondere 1,0 - 20,0 Gew.-%, weiter insbesondere 5,0 - 15,0 Gew.-%, weiter insbesondere 3,0 - 7,0 Gew.-%, weiter insbesondere 5,0 Gew.-%, 7,0 Gew.-% oder 10,0 Gew.-% des Gleitmaterials. Insofern kann der Anteil der Polymerbasis insbesondere 75,0 - 99,0 Gew.-%, weiter insbesondere 80,0 - 99,0 Gew.-%, weiter insbesondere 85,0 - 95,0 Gew.-%, weiter insbesondere 93,0 - 97,0 Gew.-%, weiter insbesondere 90,0 Gew.-%, 93,0 Gew.-% oder 95,0 Gew.-%, des Gleitmaterials betragen.

Das Gleitmaterial kann zur Herstellung eines Gleitlagerverbundwerkstoffs verwendet werden. Insofern betrifft die Erfindung auch einen Gleitlagerverbundwerkstoff umfassend das vorstehend beschriebene Gleitmaterial. Die vorstehend im Zusammenhang mit dem Gleitmaterial als solches beschriebenen Vorteile und optionalen Merkmale können dabei auch zur Ausgestaltung des Gleitlagerverbundwerkstoffs dienen. Zur Vermeidung von Wiederholungen wird daher auf vorstehende Offenbarung hierzu verwiesen.

Gemäß einem ersten vorteilhaften Aspekt kann der Gleitlagerverbundwerkstoff eine, insbesondere metallische, Stützschicht, insbesondere aus Stahl oder einer Kupferlegierung, eine, insbesondere unmittelbar auf die Stützschicht aufgebrachte, poröse Trägerschicht, insbesondere aus Bronze, vorzugsweise aus bleifreier Bronze, und das vorstehend beschriebene Gleitmaterial umfassen, wobei das Gleitmaterial in die poröse Trägerschicht einimprägniert ist. Ein solcher Gleitlagerverbundwerkstoff weist insofern einen 3-Schicht-Aufbau aus Stützschicht, auf die Stützschicht aufgebrachter poröser Trägerschicht und in die poröse Trägerschicht einimprägniertem Gleitmaterial auf. Das Gleitmaterial bildet vorzugweise einen Überstand über die poröse Trägerschicht.

Zum Herstellen des vorstehend beschriebenen Gleitlagerverbundwerkstoffs gemäß dem ersten Aspekt werden insbesondere zunächst die metallische Stützschicht mit darauf aufgebrachter poröser Trägerschicht und das Gleitmaterial bereitgestellt. Insbesondere wird das Gleitmaterial in Form einer Gleitmaterial-Folie (d.h. ein folienartiges Flachmaterial aus Gleitmaterial) bereitgestellt. Das Gleitmaterial bzw. die Gleitmaterial-Folie wird sodann auf die poröse Trägerschicht aufgelegt und im Anschluss in die poröse Trägerschicht einimprägniert, insbesondere mittels eines Heißpressprozesses und/oder Walzvorgangs. Das Gleitmaterial wird insofern insbesondere unter Temperatureintrag in die Trägerschicht gepresst.

Gemäß einem zweiten, alternativen vorteilhaften Aspekt kann der Gleitlagerverbundwerkstoff eine, insbesondere metallische, Stützschicht, insbesondere aus Stahl, einem beschichteten Stahl, oder einer Kupferlegierung, und eine Gleitschicht aus einem vorstehend beschriebenen Gleitmaterial oder umfassend ein vorstehend beschriebenes Gleitmaterial aufweisen, wobei die Gleitschicht bzw. das Gleitmaterial mittels einer Haftvermittlerschicht, insbesondere Klebeschicht, mit der Stützschicht gefügt ist. Insofern kann der Gleitlagerverbundwerkstoff eine, insbesondere metallische, Stützschicht, eine, insbesondere unmittelbar, auf die Stützschicht aufgebrachte Haftvermittlerschicht und eine auf die Haftvermittlerschicht aufgebrachte Gleitschicht aus oder umfassend Gleitmaterial umfassen. Bei vorteilhaften Ausgestaltungen kann die Stützschicht aus einer Aluminiumlegierung hergestellt sein.

Der Gleitlagerverbundwerkstoff gemäß dem zweiten Aspekt umfasst insbesondere keine poröse Trägerschicht oder sonstige Verstärkungsschichten wie bspw. Streckgitter oder Gewebe. Es wurde nämlich erfindungsgemäß erkannt, dass durch die Kombination aus UHMW-PE und den genannten Füllstoffen (Calciumphosphat und Metallsulfid) eine Belastbarkeit der Gleitschicht, insbesondere deren Verschleiß, bereits für einen Einsatz als Gleitlagerelement ausreichend verbessert ist. Eine Ausgestaltung mit Haftvermittlerschicht begünstigt daher einen einfachen und kostengünstigen Aufbau des Gleitlagerverbundwerkstoffes. Darüber hinaus begünstigt die Anbindung der Gleitschicht an die Stützschicht mittels der Haftvermittlerschicht die Verwendung von (üblicherweise vergleichsweise schwer zu verarbeitendem) ultrahochmolekularem Polyethylen mit sehr hoher Molmasse, vorzugsweise von mehr als 6,0 Millionen g/mol. Derartiges Polyethylen weist eine sehr gute Verschleißbeständigkeit auf.

Gemäß einem dritten Aspekt, kann die Gleitschicht aber auch außerdem eine, insbesondere metallische, Verstärkungsstruktur, vorzugsweise in Form eines Streckgitters oder eines Gewebes, umfassen, insbesondere in welche das Gleitmaterial einimprägniert ist. Insofern kann der Gleitlagerverbundwerkstoff gemäß dem dritten Aspekt eine, insbesondere metallische, Stützschicht, insbesondere aus Stahl, einem beschichteten Stahl oder einer Kupferlegierung, eine Gleitschicht, umfassend eine, insbesondere metallische, Verstärkungsstruktur und ein vorstehend beschriebenes Gleitmaterial, aufweisen, wobei die Gleitschicht mittels einer Haftvermittlerschicht, insbesondere Klebeschicht, mit der Stützschicht gefügt ist. Die Verstärkungsstruktur ist vorzugsweise von der Stützschicht beabstandet, insbesondere durch die Haftvermittlerschicht und/oder durch das Gleitmaterial. Hierdurch können sich vorteilhafte Spannungsverhältnisse während einer gleitenden Beanspruchung ergeben. Durch die Kombination aus UHMW-PE und den genannten Füllstoffen ist dennoch eine hohe mechanische Belastbarkeit des Gleitlagerverbundwerkstoffs gegeben. Die Verstärkungsstruktur kann insbesondere aus Bronze hergestellt sein.

Es ist grundsätzlich auch denkbar, dass die Gleitschicht, insbesondere die Verstärkungsstruktur, auf die Stützschicht aufgesintert ist. Dann ist keine zusätzliche Haftvermittlerschicht erforderlich.

Gemäß einem vierten Aspekt kann der Gleitlagerverbundwerkstoff eine Stützschicht aus UHMW-PE oder umfassend UHMW-PE, und eine Gleitschicht, umfassend eine Verstärkungsstruktur und ein vorstehend beschriebenes Gleitmaterial, aufweisen, wobei die Gleitschicht mittels einer Haftvermittlerschicht, insbesondere Klebeschicht, mit der Stützschicht gefügt ist. Gemäß einer vorteilhaften Weiterbildung des vierten Aspekts kann die Stützschicht auch aus dem vorstehend beschriebenen Gleitmaterial hergestellt sein.

Bei den genannten Gleitlagerverbundwerkstoffen mit Haftvermittlerschicht kann die Haftvermittlerschicht insbesondere unmittelbar auf die Stützschicht aufgetragen sein. Die Haftvermittlerschicht ist von der Gleitschicht bzw. dem Gleitmaterial verschieden. Wie nachfolgend noch im Detail erläutert, können die Haftvermittlerschicht und die Gleitschicht bei der Herstellung des Gleitlagerverbundwerkstoffs als Folie bereitgestellt sein. Bei der Haftvermittlerschicht kann es sich bei jedem der genannten Aspekte um eine Klebeschicht handeln. Insofern kann der Gleitlagerverbundwerkstoff eine Stützschicht und eine Gleitschicht aus einem vorstehend beschriebenen Gleitmaterial oder umfassend ein vorstehend beschriebenes Gleitmaterial aufweisen, wobei die Gleitschicht mit der Stützschicht verklebt ist.

Bei der Haftvermittlerschicht handelt es sich vorzugsweise um eine Polymerschicht. Im Rahmen einer vorteilhaften Ausgestaltung kann die Zwischenschicht ein Polyolefin oder Mischungen aus verschiedenen Polyolefinen umfassen oder daraus bestehen. Vorzugsweise umfasst die Zwischenschicht Polyethylen oder besteht daraus. Vorzugsweise umfasst die Zwischenschicht Polyethylen mit einer Molmasse kleiner 1,0 Millionen g/mol, weiter vorzugsweise kleiner 0,5 Millionen g/mol, oder besteht daraus. Besonders vorteilhaft kann es sein, wenn die Haftvermittlerschicht thermoplastisches Polyethylen umfasst oder daraus besteht. Die Haftvermittlerschicht kann ein funktionalisiertes Polyethylen umfassen. Auf diese Weise kann bspw. eine Anbindung an der Zwischenschicht und somit des Gleitmaterials an die Stützschicht verbessert werden.

Vorzugsweise ist die Haftvermittlerschicht bei der Herstellung des Gleitlagerverbundwerkstoffs von dem Gleitmaterial separat bereitgestellt. Beispielhaft und bevorzugt kann die Haftvermittlerschicht als folienartiges Flachmaterial aus Haftvermittlermaterial (Haftvermittler-Folie) bereitgestellt sein.

Ein vorteilhaftes Verfahren zum Herstellen eines solchen Gleitlagerverbundwerkstoffs gemäß dem zweiten, dritten oder vierten Aspekt kann die folgenden Schritte umfassen:
- Bereitstellen der Stützschicht;
- Bereitstellen einer Haftvermittler-Folie aus einem Haftvermittlermaterial;
- Bereitstellen einer Gleitmaterial-Folie aus dem vorstehend beschriebenen Gleitmaterial oder umfassend ein vorstehend beschriebenes Gleitmaterial und eine vorstehend beschriebene Verstärkungsstruktur, insbesondere Streckgitter oder Gewebe,
- Aufbringen des Haftvermittler-Folie auf die Stützschicht und Aufbringen der Gleitmaterial-Folie auf die Haftvermittler-Folie,
- Verpressen der Stützschicht, der Haftvermittler-Folie und der Gleitmaterial-Folie, insbesondere mittels eines Heißpressprozesses und/oder eines Walzvorgangs.

Das Bereitstellen der Gleitmaterial-Folie kann dabei insbesondere die folgenden Schritte umfassen:
- Bereitstellen einer Mischung aus ultrahochmolekularem Polyethylen und den Füllstoffen. Eine mögliche Realisierungsform kann darin bestehen, dass das UHMW-PE mit den Füllstoffen in einem Pulvertrockenmischprozess gemischt wird.;
- Pressen dieser Mischung aus dem ultrahochmolekularem Polyethylen und den Füllstoffen zu einem Block, insbesondere unter Temperatureintrag (Heißpressen);
- Abschälen eines folienartigen Flachmaterials aus dem Block.

Die Erfindung umfasst außerdem einen dreidimensionalen Formkörper bestehend aus oder mit einem Gleitmaterial der vorstehend beschriebenen Art. Der Formkörper kann an ein Trägerteil aus einem anderen Material angefügt sein. Der Formkörper kann als Gleitlagerelement aber auch als Getriebebauteil ausgebildet sein oder Verwendung finden.

Vorzugweise betragen die Abmessungen des Formkörpers in jeder Dimension mindestens 1,0 mm, insbesondere mindestens 2,0 mm und weiter insbesondere mindestens 5,0 mm oder mindestens 6,0 mm. Selbstverständlich können die Abmessungen demgegenüber auch sehr viel größer sein.

Der mit dem Gleitmaterial gebildete Gleitlagerverbundwerkstoff oder der aus oder mit dem Gleitmaterial gebildete dreidimensionale Formkörper können insbesondere als Gleitlagerelement eingesetzt werden. Insofern umfasst die Erfindung auch ein Gleitlagerelement hergestellt aus einem Gleitlagerverbundwerkstoff der vorstehend beschriebenen Arten oder umfassend einen vorstehend beschriebenen Formkörper.

Bei dem Gleitlagerelement kann es sich beispielsweise um eine Gleitleiste, einen Gleitschuh, ein Gleitkissen, eine Gleitlagerschale, eine Gleitlagerbuchse oder -bundbuchse handeln. Bei dem Gleitelement kann es sich auch um typischerweise gerollte zylindrische Buchsen oder halbschalenförmige Gleitlagerelemente handeln, die mit dem Gleitlagerverbundwerkstoff hergestellt werden. Der Gleitlagerverbundwerkstoff kann auch zur Herstellung von Bundbuchsen oder Topfbuchsen oder ebenen und sphärischen Gleitlagerelementen eingesetzt werden.

Die Erfindung wird im Folgenden anhand von Beispielen und anhand der Figuren näher erläutert. In der Zeichnung zeigen:
- Figur 1:: eine schematische Schnittansicht einer Ausgestaltung eines Gleitlagerverbundwerkstoffs gemäß einem ersten Aspekt;
- Figur 2:: eine schematische Schnittansicht einer Ausgestaltung eines Gleitlagerverbundwerkstoffs gemäß einem zweiten Aspekt;
- Figur 3:: eine schematische Schnittansicht einer Ausgestaltung eines Gleitlagerverbundwerkstoffs gemäß einem dritten Aspekt;
- Figur 4:: eine schematische Schnittansicht einer Ausgestaltung eines Gleitlagerverbundwerkstoffs gemäß einem vierten Aspekt;
- Figur 5:: Diagramm zur Erläuterung eines Verschleißverhaltens von verschiedenen aus dem Gleitlagerverbundwerkstoff hergestellten Gleitlagerelementen; und
- Figur 6:: Diagramm zur Erläuterung eines Reibverhaltens von verschiedenen aus dem Gleitlagerverbundwerkstoff hergestellten Gleitlagerelementen.

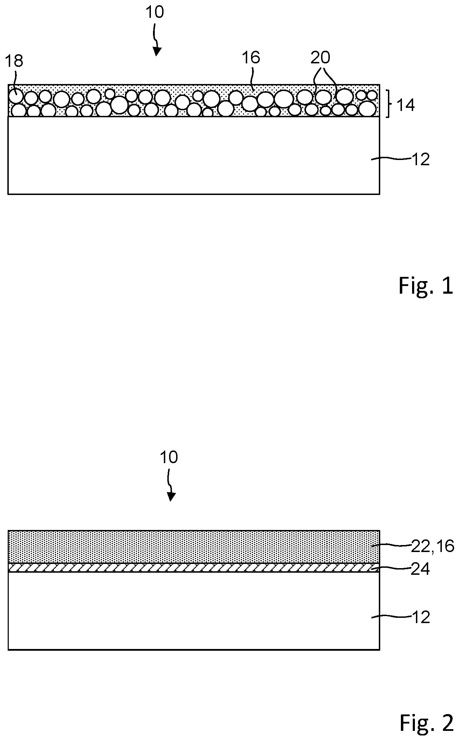

Die Figur 1 zeigt eine schematische Schnittansicht einer Ausgestaltung eines Gleitlagerverbundwerkstoffs, welcher insgesamt mit dem Bezugszeichen 10 bezeichnet ist.

In dem Beispiel gemäß Figur 1 umfasst der Gleitlagerverbundwerkstoff 10 eine metallische Stützschicht 12, typischerweise aus Stahl oder einer Kupferlegierung, und eine poröse Trägerschicht 14, insbesondere Bronzeschicht. Der Gleitlagerverbundwerkstoff 10 umfasst außerdem ein vorstehend beschriebenes Gleitmaterial 16, welches in die poröse Trägerschicht 14 einimprägniert ist.

Beispielhaft ist die poröse Trägerschicht 14 von einer Sinterschicht aus metallischen Partikeln 18 auf Bronzebasis gebildet. Die Partikel der Trägerschicht 14 bilden dabei zusammenhängende makroskopische Hohlräume 20 (die aber nicht maßstabsgetreu dargestellt sind), in welche das Gleitmaterial 16 einimprägniert ist. Wie in Fig. 1 schematisch dargestellt, füllt das Gleitmaterial 16 dabei die Poren 20 der Trägerschicht 14 im Wesentlichen vollständig aus und bildet einen Überstand über die Trägerschicht 14.

Wie vorstehend erwähnt, umfasst das Gleitmaterial 16 eine Polymerbasis, welche die Matrix des Gleitmaterials 16 bildet. Im konkreten Beispiel umfasst die Polymerbasis ultrahochmolekulares Polyethylen (UHMW-PE) mit einer Molasse von wenigstens 5,0 Millionen g/mol, vorzugsweise größer 6,0 Millionen g/mol. Vorzugsweise besteht die Polymerbasis aus ultrahochmolekularem Polyethylen.

Das Gleitmaterial 16 umfasst außerdem Füllstoffe (nicht gesondert dargestellt), die in der matrixbildenden Polymerbasis aufgenommen sind. Wie vorstehend erwähnt, umfassen die Füllstoffe Calciumphosphat und/oder mindestens ein Metallsulfid, insbesondere SnS₂ und WS₂ (vorteilhafte Zusammensetzungen siehe unten).

Wie vorstehend erwähnt, kann zur Herstellung des Gleitlagerverbundwerkstoffs 10 gemäß Figur 1 das Gleitmaterial 16 in Form eines folienartigen Flachmaterials (Gleitmaterial-Folie) bereitgestellt sein, welches dann mittels eines Heißpressprozesses in die poröse Trägerschicht einimprägniert wird.

Die Figur 2 zeigt in vereinfachter schematischer Darstellung eine weitere Ausgestaltung eines Gleitlagerverbundwerkstoffs 10. In dem Beispiel gemäß Figur 2 umfasst der Gleitlagerverbundwerkstoff 10 eine metallische Stützschicht 12, typischerweise aus Stahl, einem beschichteten Stahl, einer Kupferlegierung oder einer Aluminiumlegierung, und eine Gleitschicht 22 aus dem vorstehend beschriebenen Gleitmaterial 16. Das Gleitmaterial 16 ist über eine polymere Haftvermittlerschicht 24 mit der metallischen Stützschicht 12 verbunden.

Wie vorstehend erwähnt, können zur Herstellung des Gleitlagerverbundwerkstoffs 10 gemäß Fig. 2 das Gleitmaterial 16 und die Haftvermittlerschicht 22 jeweils als Folie bereitgestellt sein, welche dann mit der Stützschicht 12 in einem Heißpressprozess verpresst und somit verbunden werden.

Die Haftvermittlerschicht 24 kann insbesondere Polyolefine, vorzugsweise Polyethylen, umfassen oder daraus bestehen. Beispielhaft und bevorzugt kann die Klebeschicht 24 Polyethylen) mit einer Molmasse kleiner 1,0 Millionen g/mol umfassen oder daraus bestehen.

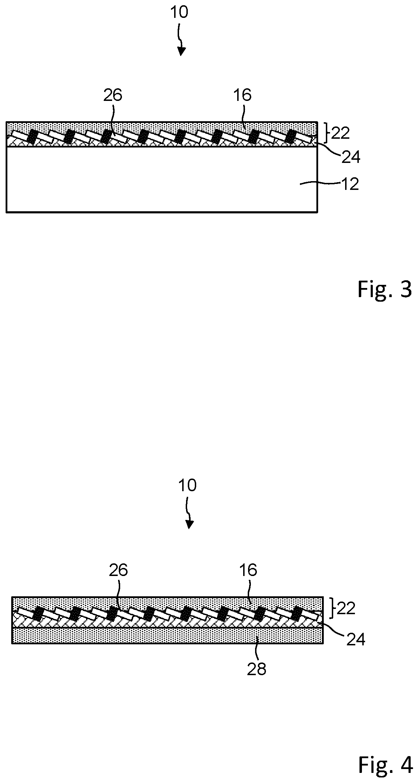

Die Figur 3 zeigt in vereinfachter schematischer Darstellung eine weitere Ausgestaltung eines Gleitlagerverbundwerkstoffs 10. In dem Beispiel gemäß Figur 3 umfasst der Gleitlagerverbundwerkstoff 10 eine metallische Stützschicht 12, typischerweise aus Stahl, einer Kupferlegierung oder einer Aluminiumlegierung, und eine Gleitschicht 22, welche nun zusätzlich zu dem Gleitmaterial 16 eine Verstärkungsstruktur 26, beispielhaft in Form eines metallischen Streckgitters, umfasst. Wie in Figur 3 angedeutet, ist das Gleitmaterial 16 insbesondere in die Verstärkungsstruktur 26 einimprägniert. Die Gleitschicht 22, umfassend das Gleitmaterial 16 und die Verstärkungsstruktur 26, ist dann mittels der vorstehend erwähnten Haftvermittlerschicht 24 mit der Stützschicht 12 gefügt.

Wie vorstehend erwähnt, können zur Herstellung des Gleitlagerverbundwerkstoffs 10 gemäß Figur 3 die Verstärkungsstruktur 26 mit dem imprägnierten Gleitmaterial 16 und die Haftvermittlerschicht jeweils als Folie bereitgestellt sein, welche dann mit der Stützschicht 12 in einem Heißpressprozess verpresst und somit verbunden werden.

Die Figur 4 zeigt in vereinfachter schematischer Darstellung eine weitere Ausgestaltung eines Gleitlagerverbundwerkstoffs 10. Das Beispiel gemäß Figur 4 unterscheidet sich von dem Gleitlagerverbundwerkstoff 10 gemäß Figur 3 dadurch, dass statt der metallischen Stützschicht 12 eine Stützschicht 28 umfassend ultrahochmolekulares Polyethylen (UHMW-PE) vorgesehen ist. Beispielhaft kann die Stützschicht 28 auch aus dem Gleitmaterial 16 bestehen. Ansonsten entspricht die Ausgestaltung gemäß Figur 4 der Ausgestaltung gemäß Figur 3.

In der nachfolgenden Tabelle sind bevorzugte Zusammensetzungen des Gleitmaterials 16 angegeben, wobei nur die Beispiele 2, 3 und 5 Gleitmaterialien gemäß der Erfindung zeigen. Das Beispiel 1, bei dem das Gleitmaterial zu 100% aus UHMW-PE besteht (also keine Füllstoffe enthält), dient als Referenzbeispiel für die nachfolgend beschriebenen Verschleißanalysen. Das Beispiel 4 ist ein nicht erfindungsgemäßes Vergleichsbeispiel.

| Beispiel | Zusammensetzung |
|---|---|
| 1 | 100 Gew.-% UHMW-PE |
| 2 | 95 Gew.-% UHMW-PE |
| | 5 Gew.-% (Mischung aus Calciumphosphat / SnS₂/ WS₂) |
| 3 | 97 Gew.-% UHMW-PE |
| | 3 Gew.-% (Mischung aus Calciumphosphat / SnS₂/ WS₂) |
| 4 | 95 Gew.-% UHMW-PE |
| | 5 Gew.-% BaSO₄ |
| 5 | 94 Gew.-% UHMW-PE |
| | 3 Gew.-% (Mischung aus Calciumphosphat / SnS₂/ WS₂) |
| | 3 Gew.-% BaSO₄ |

In den genannten Beispielen weist die Mischung aus Calciumphosphat, SnS₂ und WS₂ beispielhaft und bevorzugt folgende Zusammensetzung auf: 88 Gew.-% Calciumphosphat / 8,5 Gew.-% SnS₂ / 3,5% Gew-% WS₂.

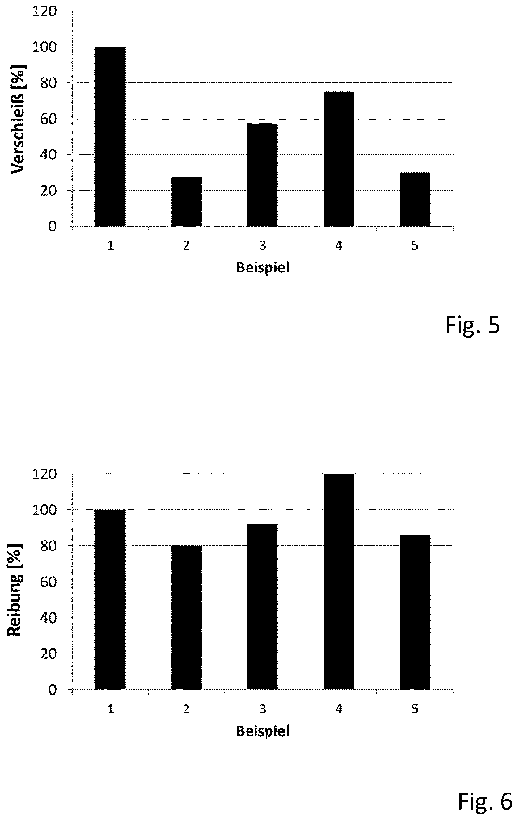

Das Verschleiß- und Reibverhalten dieser Beispiele wird nachfolgend unter Bezugnahme auf die Figuren 3 und 4 erläutert. Die Figur 5 zeigt dabei das Ergebnis von Verschleißmessungen und die Figur 6 von Reibwertmessungen an Gleitlagerelementen, die aus einem Gleitlagerverbundwerkstoff 10 unter Verwendung von Gleitmaterialien 16 der vorstehenden Beispiele 1 bis 5 hergestellt wurden.

Im Konkreten wurden für die Verschleiß- und Reibanalyse Buchsen aus einem Gleitlagerverbundwerkstoff 10 gemäß Fig. 1 unter Verwendung der Werkstoffzusammensetzungen der Beispiele 1 bis 5 als Gleitmaterial 16 hergestellt.

Die Verschleißfestigkeit und die Reibwerte wurden dabei in einer Rotationsprüfung mit einer Gleitgeschwindigkeit von 0,25 m/s unter einer Last von 23,4 MPa ermittelt. Die Prüfparameter sind in der nachstehenden Tabelle angegeben.

| Prüfparameter | Prüfparameter |
|---|---|
| Schmierzustand | Trockenlauf |
| Gegenkörper | 100Cr6 |
| Last | 23,4 MPa |
| Gleitgeschwindigkeit | 0,25 m/s |
| Testdauer | 4 h |

Das Beispiel 1, bei dem das Gleitmaterial zu 100% aus UHMW-PE besteht, dient dabei als Referenzbeispiel, auf dessen Messwerte die anderen Beispiele bezogen sind.

Wie aus Figur 5 ersichtlich, zeigen die Beispiele, die als Füllstoff eine Mischung aus Calciumphosphat, WS₂ und SnS₂ enthalten, einen deutlich und überraschend niedrigeren Verschleiß als die Vergleichsbeispiele sowie das Referenzbeispiel - bei verbessertem Reibwert (vgl. Figur 6).

Bei einem Vergleich der Beispiele 3 und 5 wird zudem deutlich, dass bei - gleichbleibendem Anteil der Mischung aus Calciumphosphat, SnS₂/und WS₂ - durch Zugabe von BaSO₄ sowohl Verschleiß als auch Reibwert reduziert werden können.

## Patentansprüche

1. Gleitmaterial (16) auf Polymerbasis mit die tribologischen Eigenschaften verbessernden Füllstoffen,
wobei die Polymerbasis ultrahochmolekulares Polyethylen mit einer Molmasse von wenigstens 5,0 Millionen g/mol umfasst,
**dadurch gekennzeichnet, dass**
die Füllstoffe eine Mischung aus Calciumphosphat, WS₂ und SnS₂ umfassen, wobei der Anteil dieser Mischung maximal 15,0 Gew.-% des Gleitmaterials beträgt.

2. Gleitmaterial (16) nach Anspruch 1, wobei der Anteil der Mischung aus Calciumphosphat, WS₂ und SnS₂ maximal 10,0 Gew.-%, weiter vorzugsweise maximal 7,0 Gew.-%, weiter vorzugsweise maximal 5,0 Gew.-%, weiter vorzugweise 1,0 - 10,0 Gew.-%, weiter vorzugsweise 1,0 - 7,0 Gew.-%, weiter vorzugsweise 1,0 - 5,0 Gew.-%, weiter vorzugsweise 3,0 - 7,0 Gew.-%, weiter vorzugsweise 3,0 - 5,0 Gew.-%, des Gleitmaterials beträgt.

3. Gleitmaterial (16) nach Anspruch 1 oder 2, wobei die Mischung aus Calciumphosphat und mindestens einem Metallsulfid folgende Zusammensetzung aufweist:
70,0 - 97,0 Gew.-% Calciumphosphat,
2,0 - 20,0 Gew.-% SnS₂,
1,0 - 10,0 Gew.-% WS₂.

4. Gleitmaterial (16) nach einem der vorherigen Ansprüche, wobei die Füllstoffe außerdem BaSO₄ umfassen, insbesondere wobei der Anteil an BaSO₄ 1,0 - 10,0 Gew.-%, vorzugsweise 1,0 - 5,0 Gew.-%, des Gleitmaterials beträgt.

5. Gleitmaterial (16) nach einem der vorherigen Ansprüche, wobei die Füllstoffe wenigstens einen weiteren anorganischen Füllstoff, insbesondere Bornitrid, umfassen, insbesondere wobei der Anteil des wenigstens einen weiteren anorganischen Füllstoffs 0,5 - 3,0 Gew.-%, insbesondere 0,5 - 1,5 Gew.-%, des Gleitmaterials beträgt.

6. Gleitmaterial (16) nach einem der vorherigen Ansprüche, wobei die Füllstoffe außerdem wenigstens einen Funktionsstoff umfassen, wobei der wenigstens eine Funktionsstoff ausgewählt ist aus der Gruppe bestehend aus:
- Verstärkungsstoffen, wie insbesondere Kohlenstofffasern, Glasfasern, Polymerfasern (insbesondere Aramidfasern);
- Festschmierstoffen, wie insbesondere ZnS, Graphit, Ruß, oder hexagonales BN;
- Kunststoffpartikel, wie insbesondere Aramid (PPTA)-, PPSO2-, PI- und PAI-Partikel, Polyacrylatpartikel (PAR), PBA-Partikel, PBI-Partikel;
- Metalloxiden, wie insbesondere Fe₂O₃, Al₂O₃, SiO₂, CrO₂, TiO₂, CuO, MgO, ZnO;
- Hartstoffpartikeln, insbesondere keramische Partikel, wie SiC, Si3N4, BC, cubisches BN;
- Fluoriden, wie insbesondere CaF₂, NaF, AlF₃;
- Schichtsilikaten, wie insbesondere Kaolin, Glimmer, Wollastonit, Talk, Kieselsäure;
- metallischen Feinpulvern, wie insbesondere Bronze und Wismut; und
- Pigmenten oder Mischphasenoxidpigmenten, wie insbesondere Co-Al, Cr-Sb-Ti, Co-Ti, Fe-Al oder Co-Cr.

7. Gleitlagerverbundwerkstoff (10), umfassend
- eine, insbesondere metallische, Stützschicht (12), insbesondere aus Stahl oder einer Kupferlegierung,
- eine, insbesondere unmittelbar auf die Stützschicht (12) aufgebrachte, poröse Trägerschicht (14), insbesondere aus Bronze, vorzugsweise aus bleifreier Bronze, und
- ein Gleitmaterial (16) nach einem der vorherigen Ansprüche, wobei das Gleitmaterial (16) in die poröse Trägerschicht (14) einimprägniert ist und insbesondere einen Überstand über die poröse Trägerschicht (14) bildet.

8. Gleitlagerverbundwerkstoff (10) umfassend:
- eine Stützschicht (12, 28) und
- eine Gleitschicht (22) aus oder umfassend Gleitmaterial (16) nach einem der Ansprüche 1 bis 6, wobei die Gleitschicht (22) mittels einer, insbesondere unmittelbar auf die Stützschicht (12) aufgebrachten, Haftvermittlerschicht (24) mit der Stützschicht (12) gefügt ist.

9. Gleitlagerverbundwerkstoff (10) nach dem vorherigen Anspruch, wobei die Gleitschicht (22) außerdem eine Verstärkungsstruktur (26) aufweist.

10. Gleitlagerverbundwerkstoff (10) nach einem der Ansprüche 8 oder 9, wobei die Haftvermittlerschicht eine Polymerschicht ist, insbesondere umfassend ein Polyolefin, weiter insbesondere umfassend Polyethylen, weiter insbesondere umfassend Polyethylen mit einer Molmasse kleiner 1,0 Million g/mol, weiter insbesondere umfassend thermoplastisches Polyethylen.

11. Dreidimensionaler Formkörper für gleitende Beanspruchung bestehend aus einem Gleitmaterial (16) nach einem Ansprüche 1 bis 6.

12. Gleitlagerelement hergestellt aus einem Gleitlagerverbundwerkstoff (10) nach einem der Ansprüche 7 bis 10 oder umfassend einen Formkörper nach Anspruch 11.

13. Verfahren zum Herstellen eines Gleitlagerverbundwerkstoffs (10) gemäß Anspruch 7, umfassend:
- Bereitstellen der metallischen Stützschicht (12) mit darauf aufgebrachter poröser Trägerschicht (14);
- Bereitstellen des Gleitmaterials (16), insbesondere in Form einer Gleitmaterial-Folie,
- Imprägnieren des Gleitmaterials (16) in die poröse Trägerschicht (14), insbesondere mittels eines Heißpressprozesses.

14. Verfahren zum Herstellen eines Gleitlagerverbundwerkstoffs (10) gemäß einem der Ansprüche 8 bis 10, umfassend:
- Bereitstellen der Stützschicht (12, 28);
- Bereitstellen einer Haftvermittler-Folie aus einem Haftvermittlermaterial;
- Bereitstellen einer Gleitmaterial-Folie aus Gleitmaterial (16) nach einem der Ansprüche 1 bis 8 oder Bereitstellen einer Gleitmaterial-Folie umfassend Gleitmaterial (16) nach einem der Ansprüche 1 bis 8 und eine Verstärkungsstruktur (26), insbesondere Streckgitter oder Gewebe;
- Aufbringen des Haftvermittler-Folie auf die Stützschicht und Aufbringen der Gleitmaterial-Folie auf die Haftvermittler-Folie;
- Verpressen der Stützschicht (12, 28), der Haftvermittler-Folie und der Gleitmaterial-Folie, insbesondere mittels eines Heißpressprozesses und/oder eines Walzvorgangs

15. Verfahren nach einem der Ansprüche 13 oder 14, wobei das Bereitstellen der Gleitmaterial-Folie umfasst:
- Bereitstellen einer Mischung aus ultrahochmolekularem Polyethylen und den Füllstoffen;
- Pressen dieser Mischung zu einem Block, insbesondere unter Wärmeeintrag;
- Abschälen einer Folie aus dem Block.

## Claims

1. Polymer-based sliding material (16) having fillers which improve the tribological properties,
the polymer base comprising ultra-high molecular weight polyethylene which has a molar mass of at least 5.0 million g/mol,
**characterized in that**
the fillers comprise a mixture of calcium phosphate, WS₂ and SnS₂, the proportion of this mixture being at most 15.0 wt.% of the sliding material.

2. Sliding material (16) according to claim 1, wherein the proportion of the mixture of calcium phosphate, WS₂ and SnS₂ is at most 10.0 wt.%, more preferably at most 7.0 wt.%, more preferably at most 5.0 wt.%, more preferably 1.0 - 10.0 wt.%, more preferably 1.0 - 7.0 wt.%, more preferably 1.0 - 5.0 wt.%, more preferably 3.0 - 7.0 wt.%, more preferably 3.0 - 5.0 wt.% of the sliding material.

3. Sliding material (16) according to claim 1 or claim 2, wherein the mixture of calcium phosphate and at least one metal sulfide has the following composition:
70.0 - 97.0 wt.% calcium phosphate,
2.0 - 20.0 wt.% SnS₂,
1.0 - 10.0 wt.% WS₂.

4. Sliding material (16) according to any of the preceding claims, wherein the fillers also comprise BaSO₄, in particular wherein the proportion of BaSO₄ is 1.0 - 10.0 wt.%, preferably 1.0 - 5.0 wt.% of the sliding material.

5. Sliding material (16) according to any of the preceding claims, wherein the fillers comprise at least one additional inorganic filler, in particular boron nitride, in particular wherein the proportion of the at least one additional inorganic filler is 0.5 - 3.0 wt.%, in particular 0.5 - 1.5 wt.%, of the sliding material.

6. Sliding material (16) according to any of the preceding claims, wherein the fillers also comprise at least one functional material, wherein the at least one functional material is selected from the group consisting of:
- reinforcing materials, such as in particular carbon fibers, glass fibers, polymer fibers (in particular aramid fibers);
- solid lubricants, such as in particular ZnS, graphite, carbon black, or hexagonal BN;
- plastics particles, such as in particular aramid (PPTA), PPSO2, PI and PAI particles, polyacrylate particles (PAR), PBA particles, PBI particles;
- metal oxides, such as in particular Fe₂O₃, Al₂O₃, SiO₂, CrO₂, TiO₂, CuO, MgO, ZnO;
- hard material particles, in particular ceramic particles such as SiC, Si3N4, BC, cubic BN;
- fluorides, such as in particular CaF₂, NaF, AlF₃;
- phyllosilicates, such as in particular kaolin, mica, wollastonite, talc, silica;
- fine metal powders, such as in particular bronze and bismuth; and
- pigments or mixed phase oxide pigments, such as, in particular Co-Al, Cr-Sb-Ti, Co-Ti, Fe-Al or Co-Cr.

7. Slide bearing composite material (10), comprising
- a support layer (12), in particular made of metal, in particular made of steel or a copper alloy,
- a porous carrier layer (14), in particular made of bronze, preferably lead-free bronze, applied, in particular directly, to the support layer (12), and
- a sliding material (16) according to any of the preceding claims, wherein the sliding material (16) is impregnated into the porous carrier layer (14) and in particular forms a protrusion over the porous carrier layer (14).

8. Slide bearing composite material (10) comprising:
- a support layer (12, 28) and
- a sliding layer (22) made of or comprising sliding material (16) according to any of claims 1 to 6, wherein the sliding layer (22) is joined to the support layer (12) by means of an adhesion promoting layer (24), applied, in particular directly, to the support layer (12).

9. Slide bearing composite material (10) according to the preceding claim, wherein the sliding layer (22) also has a reinforcing structure (26).

10. Slide bearing composite material (10) according to claim 8 or claim 9, wherein the adhesion promoting layer is a polymer layer, in particular comprising a polyolefin, more particularly comprising polyethylene, more particularly comprising polyethylene which has a molar mass of less than 1.0 million g/mol, more particularly comprising thermoplastic polyethylene.

11. Three-dimensional molded body for sliding loads, consisting of a sliding material (16) according to any of claims 1 to 6.

12. Slide bearing element produced from a slide bearing composite material (10) according to any of claims 7 to 10, or comprising a molded body according to claim 11.

13. A method for producing a slide bearing composite material (10) in accordance with claim 7, comprising:
- providing the metal support layer (12) with the porous carrier layer (14) applied thereto;
- providing the sliding material (16), in particular in the form of a sliding material film,
- impregnating the sliding material (16) into the porous carrier layer (14), in particular by means of a hot pressing process.

14. Method for producing a slide bearing composite material (10) in accordance with any of claims 8 to 10, comprising:
- providing the support layer (12, 28);
- providing an adhesion promoting film which is made of an adhesion promoting material;
- providing a sliding material film made of sliding material (16) according to any of claims 1 to 8, or providing a sliding material film comprising sliding material (16) according to any of claims 1 to 8 and a reinforcing structure (26), in particular expanded metal or woven fabric;
- applying the adhesion promoting film to the support layer and applying the sliding material film to the adhesion promoting film;
- pressing the support layer (12, 28), the adhesion promoting film and the sliding material film, in particular by means of a hot pressing process and/or a rolling process.

15. Method according to claim 13 or claim 14, wherein providing the sliding material film comprises:
- providing a mixture of ultra-high molecular weight polyethylene and the fillers;
- pressing this mixture into a block, in particular using heat input;
- peeling a film from the block.

## Revendications

1. Matériau glissant (16) à base de polymère comportant des charges améliorant les propriétés tribologiques,
dans lequel la base polymère comprend du polyéthylène de masse moléculaire ultra-élevée comportant une masse moléculaire d'au moins 5,0 millions g/mol,
**caractérisé en ce que**
les charges comprennent un mélange de phosphate de calcium, de WS₂ et de SnS₂, dans lequel la proportion dudit mélange est au maximum de 15,0 % en poids du matériau glissant.

2. Matériau glissant (16) selon la revendication 1, dans lequel la proportion du mélange de phosphate de calcium, de WS₂ et de SnS₂ est au maximum de 10,0 % en poids, plus préférablement au maximum de 7,0 % en poids, plus préférablement au maximum de 5,0 % en poids, plus préférablement de 1,0 à 10,0 % en poids, plus préférablement de 1,0 à 7,0 % en poids, plus préférablement de 1,0 à 5,0 % en poids, plus préférablement de 3,0 à 7,0 % en poids, plus préférablement de 3,0 à 5,0 % en poids, du matériau glissant.

3. Matériau glissant (16) selon la revendication 1 ou 2, dans lequel le mélange de phosphate de calcium et d'au moins un sulfure métallique présente la composition suivante:
70,0 à 97,0 % en poids de phosphate de calcium,
2,0 à 20,0 % en poids de SnS₂,
1,0 à 10,0 % en poids de WS₂.

4. Matériau glissant (16) selon l'une des revendications précédentes, dans lequel les charges comprennent en outre du BaSO₄, en particulier dans lequel la proportion de BaSO₄ est de 1,0 à 10,0 % en poids, de préférence de 1,0 à 5,0 % en poids, du matériau glissant.

5. Matériau glissant (16) selon l'une des revendications précédentes, dans lequel les charges comprennent au moins une autre charge inorganique, en particulier du nitrure de bore, en particulier dans lequel la proportion de l'au moins une autre charge inorganique est de 0,5 à 3,0 % en poids, en particulier de 0,5 à 1,5 % en poids, du matériau glissant.

6. Matériau glissant (16) selon l'une des revendications précédentes, dans lequel les charges comprennent en outre au moins un matériau fonctionnel, dans lequel l'au moins un matériau fonctionnel est choisi dans le groupe constitué:
- de matériaux de renforcement, tels qu'en particulier fibres de carbone, fibres de verre, fibres polymères (en particulier fibres d'aramide);
- de lubrifiants solides, tels qu'en particulier ZnS, graphite, noir de carbone, ou nitrure de bore hexagonal;
- de particules de plastique, telles qu'en particulier particules d'aramide (PPTA), de PPSO2, de PI et de PAI, particules de polyacrylate (PAR), particules de PBA, particules de PBI;
- d'oxydes métalliques, tels qu'en particulier Fe₂O₃, Al₂O₃, SiO₂, CrO₂, TiO₂, CuO, MgO, ZnO;
- de particules solides, en particulier de particules céramiques, telles que SiC, Si3N4, carbure de bore, nitrure de bore cubique;
- de fluorures, tels qu'en particulier CaF₂, NaF, AlF₃;
- de silicates en couches, tels qu'en particulier kaolin, mica, wollastonite, talc, silice;
- de poudres fines métalliques, telles qu'en particulier bronze et bismuth; et
- de pigments ou de pigments d'oxyde à phase mixte, tels qu'en particulier Co-Al, Cr-Sb-Ti, Co-Ti, Fe-Al ou Co-Cr.

7. Matériau composite pour palier lisse (10), comprenant
- une couche de support (12), en particulier métallique, en particulier en acier ou en alliage de cuivre,
- une couche porteuse poreuse (14), en particulier en bronze, de préférence en bronze sans plomb, appliquée en particulier directement sur la couche de support (12), et
- un matériau glissant (16) selon l'une des revendications précédentes, dans lequel le matériau glissant (16) est imprégné dans la couche porteuse poreuse (14) et forme en particulier un débordement par rapport à la couche porteuse poreuse (14).

8. Matériau composite pour palier lisse (10) comprenant:
- une couche de support (12, 28) et
- une couche glissante (22) en matériau glissant (16) selon l'une des revendications 1 à 6 ou comprenant un tel matériau glissant, dans lequel la couche glissante (22) est assemblée avec la couche de support (12) au moyen d'une couche d'agent adhésif (24), en particulier appliquée directement sur la couche de support (12).

9. Matériau composite pour palier lisse (10) selon la revendication précédente, dans lequel la couche glissante (22) présente en outre une structure de renforcement (26).

10. Matériau composite pour palier lisse (10) selon l'une des revendications 8 ou 9, dans lequel la couche d'agent adhésif est une couche polymère, en particulier comprenant une polyoléfine, plus particulièrement comprenant du polyéthylène, plus particulièrement comprenant du polyéthylène comportant une masse molaire inférieure à 1,0 million g/mol, plus particulièrement comprenant du polyéthylène thermoplastique.

11. Corps moulé tridimensionnel pour sollicitation par glissement, constitué d'un matériau glissant (16) selon l'une des revendications 1 à 6.

12. Élément formant palier lisse fabriqué en un matériau composite pour palier lisse (10) selon l'une des revendications 7 à 10 ou comprenant un corps moulé selon la revendication 11.

13. Procédé pour la fabrication d'un matériau composite pour palier lisse (10) selon la revendication 7, comprenant:
- la mise à disposition de la couche de support (12) métallique sur laquelle est appliquée une couche porteuse poreuse (14);
- la mise à disposition du matériau glissant (16), en particulier sous la forme d'une feuille de matériau glissant,
- l'imprégnation du matériau glissant (16) dans la couche porteuse poreuse (14), en particulier au moyen d'un processus de pressage à chaud.

14. Procédé pour la fabrication d'un matériau composite pour palier lisse (10) selon l'une des revendications 8 à 10, comprenant:
- la mise à disposition de la couche de support (12, 28);
- la mise à disposition d'une feuille d'agent adhésif en un matériau d'agent adhésif;
- la mise à disposition d'une feuille de matériau glissant en matériau glissant (16) selon l'une des revendications 1 à 8 ou la mise à disposition d'une feuille de matériau glissant comprenant un matériau glissant (16) selon l'une des revendications 1 à 8 et une structure de renforcement (26), en particulier un métal déployé ou un tissu;
- l'application de la feuille d'agent adhésif sur la couche de support et l'application de la feuille de matériau glissant sur la feuille d'agent adhésif;
- le pressage de la couche de support (12, 28), de la feuille d'agent adhésif et de la feuille de matériau glissant, en particulier au moyen d'un processus de pressage à chaud et/ou d'un processus de laminage.

15. Procédé selon l'une des revendications 13 ou 14, dans lequel la mise à disposition de la feuille de matériau glissant comprend:
- la mise à disposition d'un mélange de polyéthylène de masse moléculaire ultra-élevée et de charges;
- le pressage dudit mélange en un bloc, en particulier avec apport de chaleur;
- le fait de peler une feuille du bloc.
